# EUROPÄISCHE PATENTSCHRIFT

(11) **EP 1 159 196 B1**
(45) Veröffentlichungstag und Bekanntmachung des Hinweises auf die Patenterteilung: **09.10.2002**
(21) Anmeldenummer: 00918759.2
(22) Anmeldetag: 04.03.2000
(51) Int. Cl.: B64F 1/305

(54) **UNIVERSAL-FLUGGASTBRÜCKE**
UNIVERSAL TELESCOPIC GANGWAY
PASSERELLE UNIVERSELLE POUR LES PASSAGERS D'UN AVION

(30) Priorität: 17.03.1999 DE 19911880
(43) Veröffentlichungstag der Anmeldung: 05.12.2001
(73) Patentinhaber: Thyssen Henschel Airport Systems GmbH, 34127 Kassel (DE)
(72) Erfinder: WORPENBERG, Friedhelm, D-34128 Kassel (DE); SCHARF, Lothar, D-37242 Bad Soden-Allendorf (DE)
(74) Vertreter: Dahlkamp, Heinrich-Leopold, Dipl.-Ing.
(86) Internationale Anmeldenummer: EP0001919
(87) Internationale Veröffentlichungsnummer: WO00055039

(56) Entgegenhaltungen:
- EP-A- 0 302 709
- US-A- 3 404 417

## Beschreibung

Die Erfindung bezieht sich auf eine Universal-Fluggastbrücke zur Abfertigung von Commuter-, Narrowbody- oder Widebody-Flugzeugen gemäß Oberbegriff des Anspruches 1.

Aus der EP 0 302 709 B1 ist eine Fluggastbrücke mit einem Teleskopdurchgang bekannt, der am Fluggastaustrittsende eine Kabinenanordnung aufweist und an diesem Ende von einer mit Rädern versehenen Hebestützkonstruktion getragen wird, um das Ende des Durchganges anzuheben oder abzusenken und auf dem Vorfeld zu verfahren. Die Hebestützkonstruktion besitzt dabei nur eine einzige vertikale Elevatorstütze, deren oberes Ende durch die Kabinenanordnung ragt. Die Kabinenanordnung ist dabei zu einer Seite der Längsachse des Durchgangs teilweise versetzt, um eine ungehinderte Durchquerung auf einer Seite der Elevatorstütze für die Fluggäste zu gewährleisten. Die Anordnung der Elevatorstütze im Bereich der Kabine kann insbesondere bei Commuter-Flugzeugen (Propellermaschinen) zu Problemen beim Heranfahren der Kabine an die Flugzeugtür führen, wenn die Elevatorstütze zu nah an die Propellerspitze herankommt.

In der US-A 5,761,757 ist eine frei auf dem Vorfeld verfahrbare Teleskopbrücke beschrieben, deren Kabine mit einem speziell zum Andocken an sogenannte Commuter-Flugzeuge konstruierten Kabinenboden versehen ist. Bei den Commuter-Flugzeugen sind üblicherweise die Türen im unteren Bereich an horizontale Achsen angelenkt, um sie zum Öffnen nach außen zu schwenken. Dazu ist bei der Brücke ein Teil des Kabinenbodens horizontal unter den anderen Teil des Kabinenbodens verschiebbar, so daß ein Freiraum entsteht zur Aufnahme des Geländers der ausgeklappten Flugzeugtreppe. Vor dem Andocken muß hierbei die Anlegeschwelle (Bumper) entfernt werden. Auch bei dieser Brückenkonstruktion besteht das Problem, daß die Kontur des relativ großen und schwer manövrierbaren Brückenkopfes in den kritischen Bereich des Propellertriebwerkes geraten kann und es beim Anund Abdocken an Commuter-Flugzeuge leicht zu einer Beschädigung des Propellers, der bordeigenen Treppe oder des Treppengeländers kommen kann.

Aus der DE 28 47 166 A1 ist eine Passagierverladebrücke zum Verbinden eines Flugzeuges mit dem Erdgeschoss eines Flughafenstationsgebäudes bekannt, wobei eine Rotunde einerseits mit dem Gebäude und andererseits mit einem nicht teleskopierbaren, horizontal und vertikal schwenkbaren Tunnel verbunden ist. Flugzeugseitig ist an diesem Tunnel in einem Winkel von 25° bis 50° zur Längsachse des Tunnels ein Kurztunnel angebracht, der zum Ausgleich von Flugzeugparktoleranzen mit seiner endseitigen Kabine senkrecht zur Längsachse eines Flugzeuges bewegt werden kann. Die Kabine ist dabei zusätzlich um ungefähr 30° um eine senkrechte Achse schwenkbar. Insbesondere Commuter-Flugzeuge mit hinter der Tragfläche bzw. nahe am Propellertriebwerk liegenden Türen können mit dieser Passagierverladebrücke wegen der nicht ausreichenden Teleskopierbarkeit sowie wegen des zu geringen Kabinenschwenkbereiches nicht abgefertigt werden.

Der Erfindung liegt daher die Aufgabe zugrunde, eine universell verwendbare Fluggastbrücke zu entwickeln, mit der alle üblichen Narrowbody- oder Widebody-Flugzeuge, aber insbesondere auch Commuter-Flugzeuge an Bug- bzw. Hecktür problemlos, d. h. ohne die Gefahr einer Kollision mit ihren Propellertriebwerken, abgefertigt werden können.

Die Lösung dieser Aufgabe ist im Patentanspruch 1 angegeben. Die Unteransprüche 2 bis 7 enthalten sinnvolle Ausführungsformen dazu.

Die gelenkig über eine Rotunde mit dem Flughafengebäude verbundene Universal-Fluggastbrücke ist mittels eines Hub- und Fahrwerkes frei auf dem Vorfeld verfahrbar. An dem flugzeugseitigen Ende der Brücke ist erfindungsgemäß ein um ca. 30° bis 60°,vorzugsweise 45°, zur linken Seite hin gekröpfter fester Brückenkopf angeordnet, an dem die vorzugsweise mit einem ganz oder teilweise verschiebbaren Boden versehene Kabine um eine senkrechte Achse schwenkbar befestigt ist. Durch die zur Propellerspitze hin abgekröpfte Konstruktion des Brückenkopfes und die außermittige Drehachse der Kabine kann die Brücke insgesamt auf einfache Weise an die vordere Flugzeugtür herangefahren werden, ohne daß Brückenkopf und Kabine in den Propellerbereich geraten.

Es hat sich weiterhin als günstig erwiesen, in der abgeschrägten Seitenwand des Brückenkopfes ein großes Fenster anzuordnen, durch das der Brückenfahrer insbesondere bei der Abfertigung von Commuter-Flugzeugen gute Sicht auf den Propeller hat, dem sich die erfindungsgemäße Fluggastbrücke im Grenzfall bis auf höchsten 0,5 m nähern darf.

Insbesondere bei ebenerdig angeordneter Rotunde hat es sich als günstig erwiesen, zwischen dem äußeren Tunnel und dem festen Brückenkopf einen keilförmigen Adapter einzusetzen, um einen stets etwas zum Flugzeug hin geneigten Kabinenboden zu gewährleisten. Dabei kann zusätzlich zugunsten einer auskömmlich komfortablen Neigung der Brücke in der Mittelachse der am Fluggastgebäude angeordneten Rotunde das Drehgelenk zur Vertikalverstellung der Kabine angeordnet sein. Die Rotunde ist zudem mit einem einteiligen, in seiner Form einer Lampionlaterne nachempfundenen Faltenbalg versehen, der jeweils an der Stirnseite des am Flughafengebäude befestigten Rotundenhalses und des inneren Brückentunnels befestigt ist.

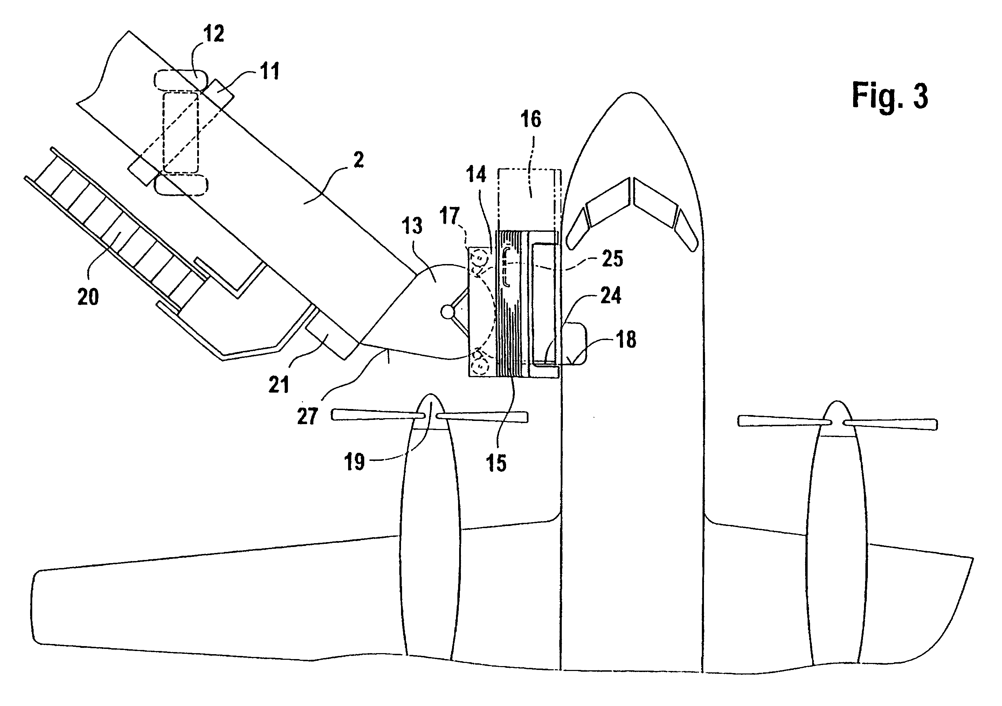

Der um ein Zentralgelenk schwenkbare Fahrantrieb der Brücke kann bei einer unzulässig engen Näherung des Brückenkopfes an den Propeller eines Commuter-Flugzeuges von z. B. weniger als 0,5 m über Abstandserfassungsgeräte und entsprechende Schaltungen automatisch angehalten und vor Freigabe zur weiteren Annäherung an das Flugzeug über eine Synchronschaltung parallel zum Kabinenboden hin ausgerichtet werden (vgl. Figur 3). Alternativ hierzu kann auch zum Schutz des Propellers die Fluggastbrücke automatisch in eine etwa 2 m vor der endgültigen Andockposition entfernte Vorparkposition gefahren werden und von hieraus nun angedockt werden. Schließlich können auch die beiden Bewegungsvorgänge "Schwenken" und "Teleskopieren" elektronisch derart gegeneinander verriegelt werden, daß die Brücke entweder nur "schwenken" oder nur "teleskopieren" kann. Die Verriegelung bleibt dabei solange aktiviert, bis die Brücke etwa 2 m von der endgültigen Andockposition entfernt ist. Anschließend wird die Brücke angedockt.

Der Vorteil des erfindungsgemäßen Vorschlages besteht also insgesamt darin, daß
- durch die abgekröpfte und abgeschrägte Form des Brückenkopfes mit außermittiger Drehachse und durch den ungeteilten, insgesamt verschiebbarem Kabinenboden beim Anfahren der Kabine an die Flugzeugtür eine unzulässige Annäherung an den Propellerbereich und die Treppengeländer vermieden wird,
- der Brückenkopf insgesamt leichter ist,
- die Brücke sowohl an die üblichen großen Passagierflugzeuge als auch an alle gebräuchlichen Commuter-Flugzeuge angedockt werden kann,
- durch die Verlagerung des Drehgelenkes für die vertikale Verstellung des Brückenkopfes in die Mittelachse der am Gebäude befestigten Rotunde trotz des durch die Commuter-Flugzeuge erweiterten Hubbereiches eine komfortable Brückenneigung gewährleistet wird und
- die Rotunde wahlweise ebenerdig oder auf Geschoßbodenhöhe an das Terminalgebäude angeschlossen werden kann.

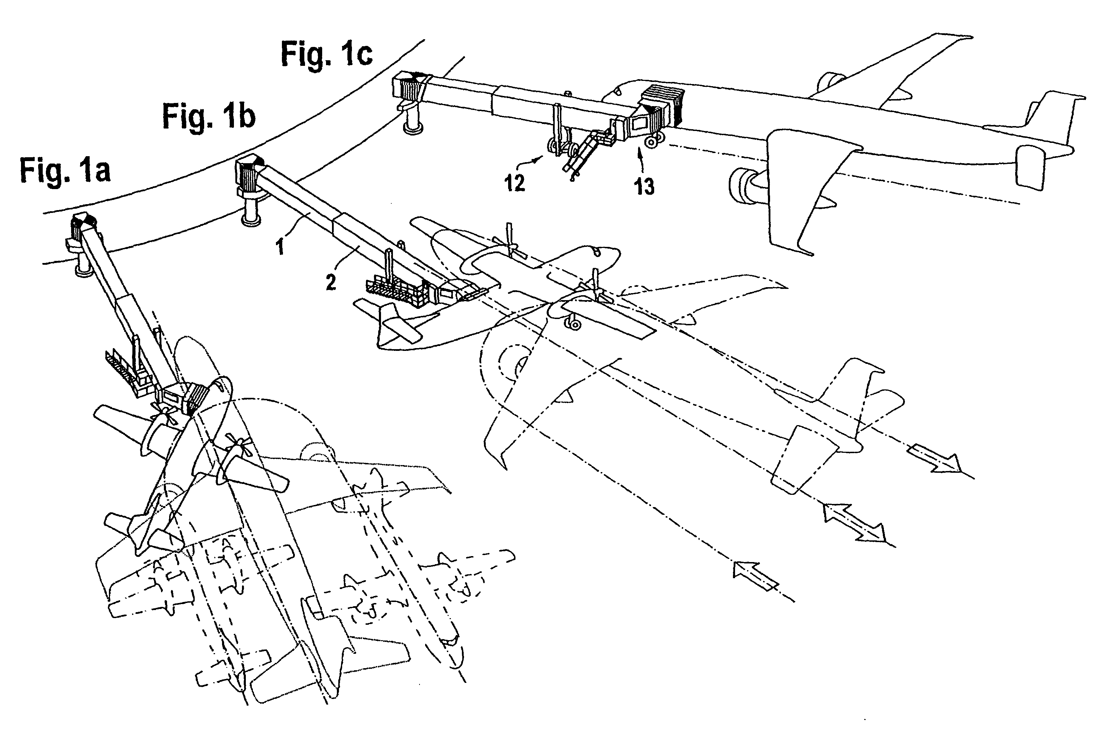

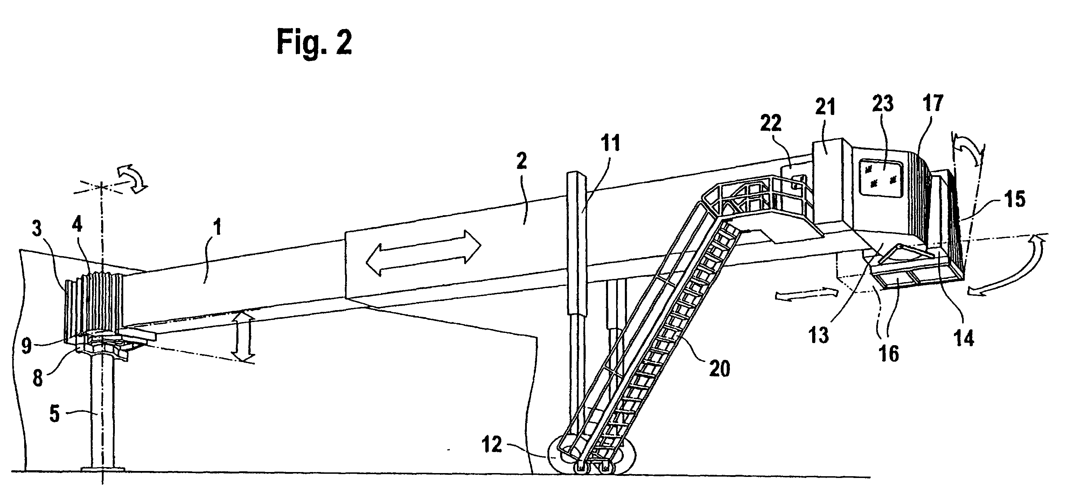

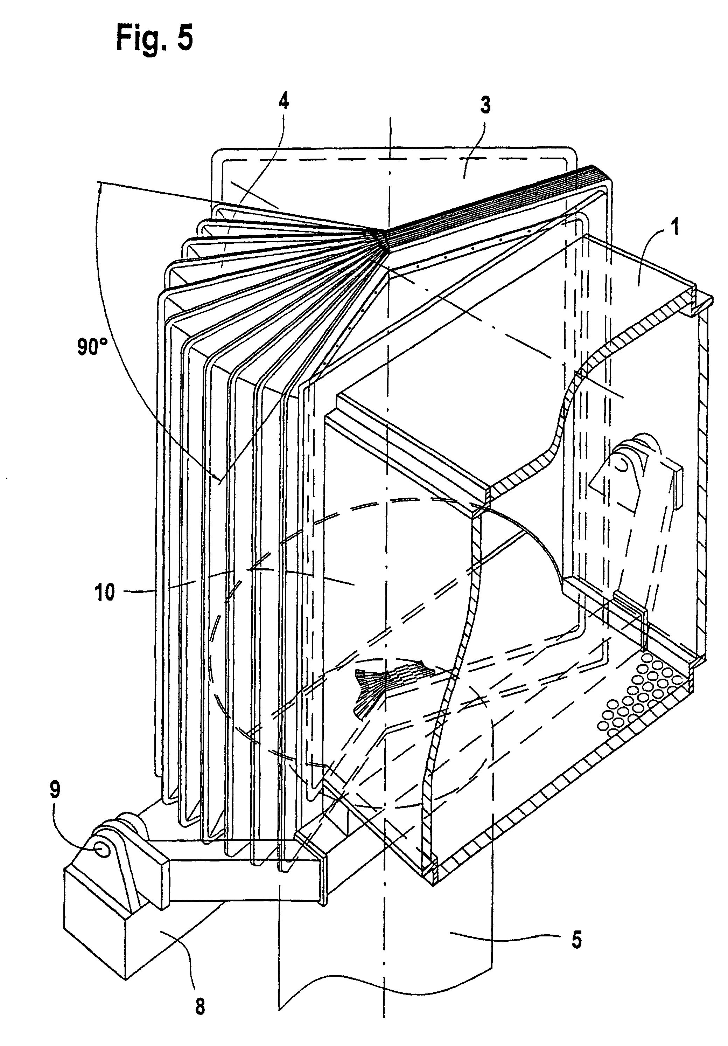

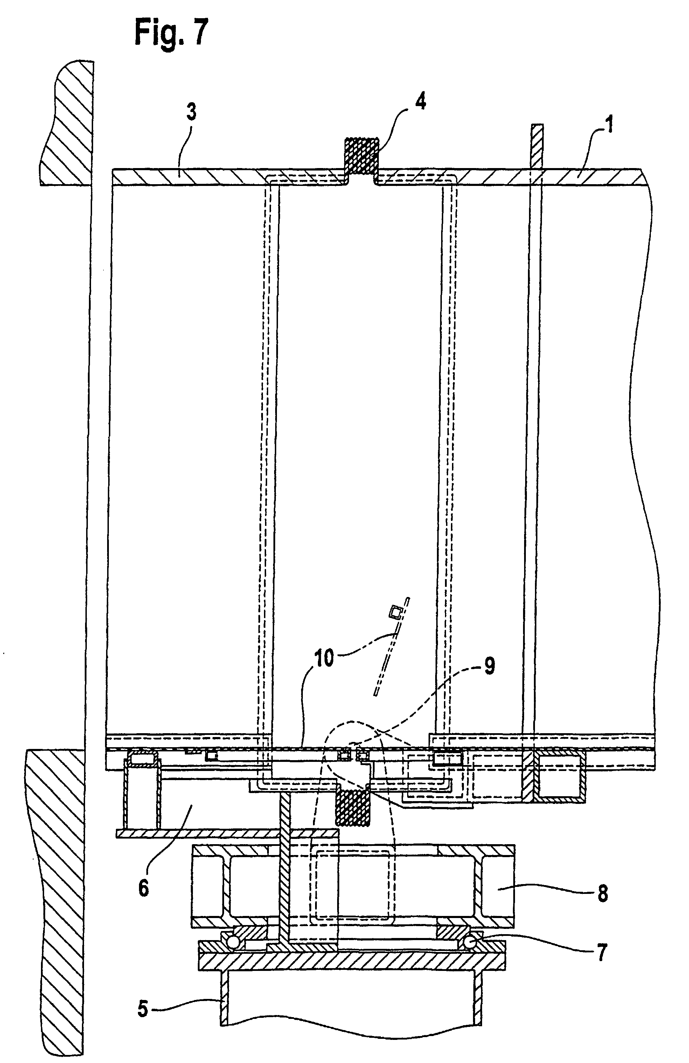

Die Erfindung wird anhand der beigefügten Figuren 1 bis 7 beispielsweise näher erläutert. Es zeigen:
- Figur 1: in perspektivischer Darstellung die Universal-Fluggastbrücke in folgenden unterschiedlichen Andocksituationen:
a) die Brücke ist an die Bugtür eines Commuter-Flugzeuges mit Propellertriebwerk angedockt (z. B. SAAB 340, DO 328, DASH 8)
b) die Brücke ist an die Hecktür eines Commuter-Flugzeuges mit Propellertriebwerk angedockt (z. B. ATR 42)
c) die Brücke ist an die Bugtür eines üblichen
Passagierflugzeuges angedockt (z. B. B 757);
- Figur 2: eine perspektivische Darstellung der auf Geschoßhöhe am Terminalgebäude angeschlossenen Universal-Fluggastbrücke - vom Vorfeld aus in Richtung des (nicht dargestellten) Widebody-Flugzeuges hin betrachtet;
- Figur 3: eine Draufsicht auf die Situation einer an ein Commuter-Flugzeug mit Propellertriebwerk (z. B. SAAB 340) angedockten Universal-Fluggastbrücke;
- Figur 4: eine perspektivische Darstellung der ebenerdig am Terminalgebäude angeschlossenen Universal-Fluggastbrücke, angedockt an die Bugtür eines Commuter-Flugzeuges mit Propellertriebwerk (z. B. SAAB 340);
- Figur 5: eine perspektivische Darstellung der am Flughafengebäude befestigten Rotunde mit dem auf die Rotundenmitte zurückgesetzten Drehgelenk 9 für die vertikale Verstellung;
- Figur 6: einen Horizontalschnitt durch die Rotunde nach Figur 5 und den daran angeschlossenen Brückentunnel;
- Figur 7: einen Vertikalschnitt durch die Rotunde und den daran angeschlossenen Brückentunnel.

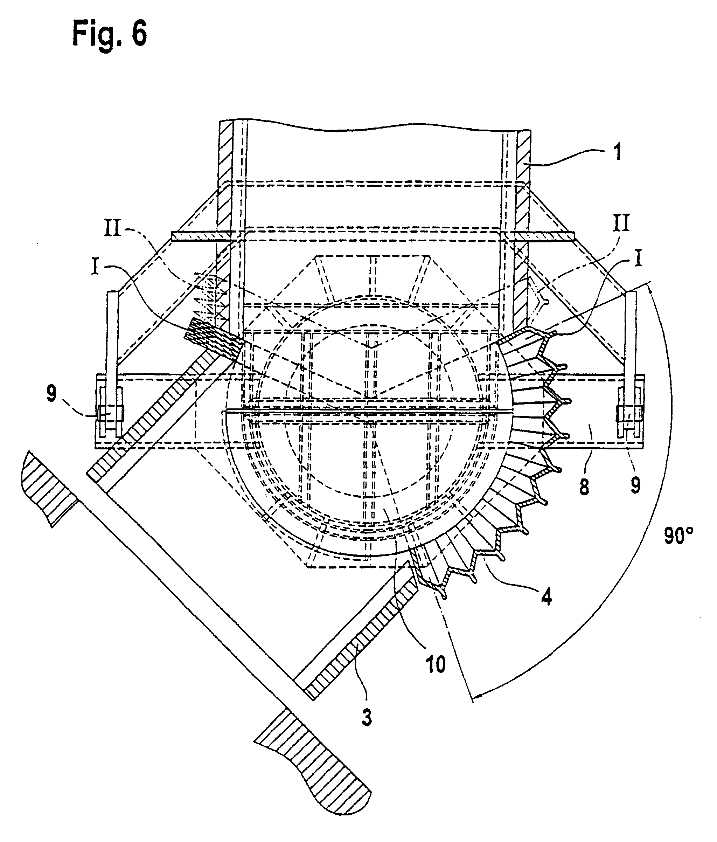

Die aus zwei ineinander teleskopierbaren Tunnelelementen 1 und 2 bestehende Fluggastbrücke ist terminalseitig über eine Rotunde angeschlossen. Diese besteht aus dem fest am Gebäude angeordneten Rotundenhals 3, dem daran sowie am Tunnelelement 1 befestigten Faltenbalg 4, dem Standbein 5 mit Adapter 6, dem Drehgelenk 7 mit vertikaler Drehachse, dem Tragrahmen 8 mit seinen Drehgelenken 9, die eine horizontale Drehachse besitzen und dem halbkreisförmigen, hochklappbaren Rotundenboden 10, der gelenkig am Boden des Brückentunnels 1 befestigt ist. Figur 6 zeigt für den Regelfall bei I den Faltenbalg 4 bei horizontal stehender Brücke und bei II den Faltenbalg 4 bei einer um 10% geneigt stehenden Brücke. Bei ebenerdig angeordneter Rotunde wird die Stirnseite des Tunnelelementes 1 dementsprechend angepaßt. Das äußere Tunnelelement 2 ist über das Rahmenhubwerk 11 mit dem Fahrwerk 12 verbunden und flugzeugseitig mit einem zur Seite hin um ca. 30° gekröpften, besonders raum- und gewichtssparend figurierten festen Brückenkopf 13 versehen. An dem Brückenkopf ist die Kabine 14 mit ihrem flexiblen Vordach 15, einem seitlich im ganzen verschiebbaren sowie in der Höhe nachführbaren Kabinenboden 16 und mit vertikal angeordneten Rollwänden 17 schwenkbar befestigt.

In Figur 3 ist die Situation bei der Abfertigung eines Commuter-Flugzeuges (Typ SAAB 340) mit Propellertriebwerk und minimalem lateralen Abstand zwischen der rechten Türkante 18 und der Propellerspitze 19 dargestellt. Bei einem konstruktiv gesicherten Mindestabstand von 0,5 m zwischen der rechtsseitigen Kontur der schwenkbaren Kabine 14 bzw. des festen Brückenkopfes 13 und der Propellerspitze 19 verbleibt ausreichend Manövrierraum zum sicheren Andocken und Abdocken der Fluggastbrücke. Der Zugang zur Brücke für das Personal erfolgt über die Diensttreppe 20 und die unmittelbar neben dem Schaltgeräteschrank 21 angeordnete Diensttür 22. Der Brückenfahrer hat durch das in der rechten Seitenwand 27 des um ca. 30° gekröpften Brückenkopfes 13 vorgesehene große Fenster 23 gute Sicht auf das Propellertriebwerk. Bei der Abfertigung von Commuter-Flugzeugen mit ausklappbarer Bordtreppe und beidseitigem Geländer wird der mit einem Schutzgeländer 24 versehene Kabinenboden 16 im ganzen zur linken Seite hin verschoben, wobei der Raum über der Bordtreppe und zwischen den beiden Treppengeländern mit einer einfach einzulegenden Rampe 25 überbrückt wird. Die Rampe 25 ist in Figur 3 lediglich angedeutet, wobei sie dort naturgemäß nicht benutzt wird.

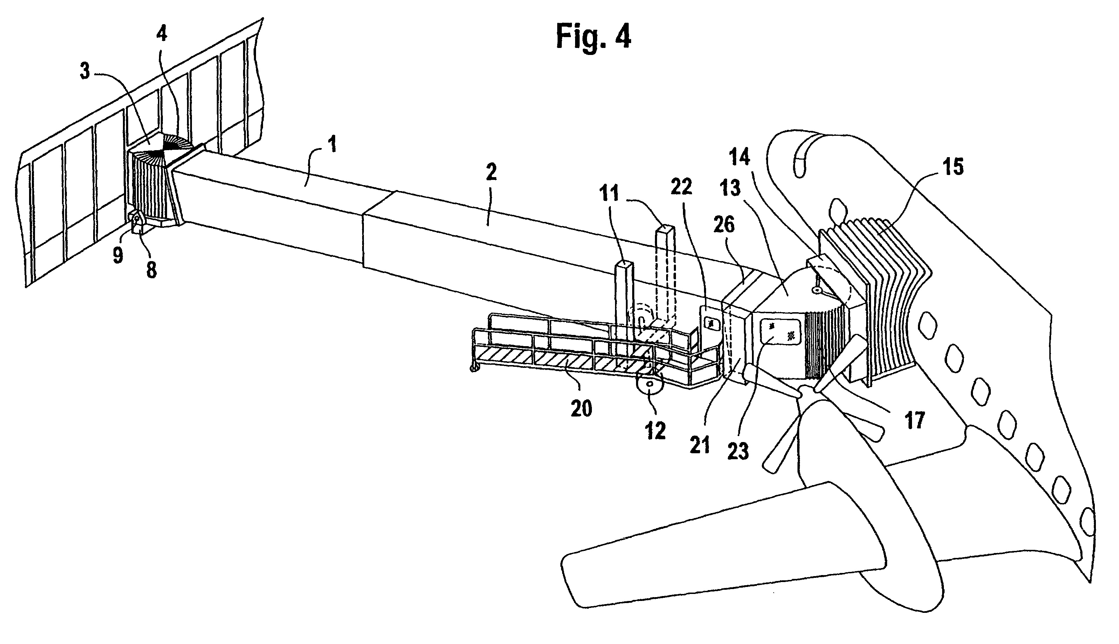

Bei ebenerdig angeordneter Rotunde gemäß Figur 4 wird zwischen dem äußeren Tunnelelement 2 und dem festen Brückenkopf 13 ein keilförmiger Adapter 26 eingesetzt, womit ein stets etwas zum Flugzeug hin geneigter Kabinenboden 16 gewährleistet wird.

### Bezugszeichenliste

- (1): Tunnelelement
- (2): Tunnelelement
- (3): Rotundenhals am Terminal
- (4): Faltenbalg zwischen (2) und (3)
- (5): Standbein
- (6): Adapter
- (7): Drehgelenk (vertikale Drehachse)
- (8): Tragrahmen
- (9): Drehgelenk (horizontale Drehachse)
- (10): Rotundenboden (halbkreisförmig, hochklappbar)
- (11): Rahmenhubwerk
- (12): Fahrwerk
- (13): fester Brückenkopf
- (14): Kabine (um vertikale Achse schwenkbar)
- (15): flexibles Vordach
- (16): Kabinenboden (seitlich im ganzen verschiebbar und in der Höhe nachführbar)
- (17): Rollwände (vertikal)
- (18): rechte Türkante des Flugzeugs
- (19): Propellerspitze
- (20): Diensttreppe
- (21): Schaltgeräteschrank
- (22): Diensttür
- (23): Fenster in (27)
- (24): Schutzgeländer an (16)
- (25): Rampe
- (26): Adapter
- (27): Seitenwand von (13) (um ca. 30° abgeschrägt)

## Patentansprüche

1. Universal-Fluggastbrücke zur Abfertigung von Commuter-, Narrowbody- und Widebody-Flugzeugen, wobei
a) die Brücke aus mindestens zwei teleskopierbaren Tunnelelementen (1, 2) besteht und mittels Rahmenhubwerk (11) und Fahrwerk (12) frei auf dem Vorfeld verfahrbar ist,
b) die Brücke flugzeugseitig einen zur linken Seite hin gekröpften, fest am Tunnelelement (2) angeordneten Brückenkopf (13) besitzt,
c) an dem Brückenkopf (13) eine Kabine (14) um eine senkrechte Drehachse um bis zu 90° schwenkbar befestigt ist und wobei
d) die senkrechte Drehachse der Kabine (14) außermittig zur Mittellängsachse des Tunnelelementes (2) angeordnet ist,
**dadurch gekennzeichnet, daß** der Brückenkopy (13) mit einer um ca. 30° bis 60° gegenüber den Tunnelelementen (1, 2) abgeschrägten, äußeren, ebenen Seitenwand (27) versehen ist.

2. Universal-Fluggastbrücke nach Anspruch 1, **dadurch gekennzeichnet, daß** die Seitenwand (27) in einem Winkel von ca. 45° gegenüber der Längswand des Tunnelelementes (2) angeordnet ist.

3. Universal-Fluggastbrücke nach Anspruch 1 oder 2, **dadurch gekennzeichnet, daß** am flugzeugseitigen Ende ein ungeteilter Kabinenboden (16) angeordnet ist, der ganz oder teilweise zur Seite hin verschiebbar ist.

4. Universal-Fluggastbrücke nach Anspruch 1, 2 oder 3, **dadurch gekennzeichnet, daß** in der Seitenwand (27) des gekröpften Brückenkopfes (13) ein Fenster (23) angeordnet ist.

5. Universal-Fluggastbrücke nach einem der Ansprüche 1 bis 4, **dadurch gekennzeichnet, daß** zwischen dem äußeren Tunnel (2) und dem festen Brückenkopf (13) ein keilförmiger Adapter (26) eingesetzt ist, womit ein stets etwa zum Flugzeug hin geneigter Kabinenboden (16) gewährleistet wird.

6. Universal-Fluggastbrücke nach einem der vorhergehenden Ansprüche, **dadurch gekennzeichnet, daß** ein Drehgelenk (9) zur Vertikalverstellung der Kabine (14) sich im Bereich der Mittelachse einer am Fluggastgebäude angeordneten Rotunde befindet.

7. Universal-Fluggastbrücke nach einem der vorhergehenden Ansprüche, **dadurch gekennzeichnet, daß** der um ein Zentralgelenk schwenkbare Fahrantrieb der Brücke zur Bestimmung des Abstandes zum Flugzeug Abstandserfassungsgeräte besitzt, um automatisch den Fahrantrieb bei Erreichen eines bestimmten Mindestabstandes zu stoppen.

## Claims

1. A universal telescopic gangway for servicing commuter aircrafts, narrowbody aircrafts, and widebody aircrafts, wherein:
a) the gangway consists of at least two telescopic tunnel sections (1,2) and can be freely moved on the apron by means of a frame lifting device (11) and a landing gear (12);
b) the gangway is provided with a bridge head (13) that is cranked towards the left side, fixedly mounted to the tunnel section (2) and that comprises an external, even side wall (27) which is bevelled by approximately 30° to 60° versus the tunnel sections (1,2);
c) a cabin (14) is pivotably mounted to said bridge head (13) around a vertical rotational axis and is rotational by up to 90°;
d) the vertical rotational axis of the cabin (14) is arranged off-center in relation to the center of the vertical axis of the tunnel section (2), **characterized in that** the bridge head (13) comprises an external, even side wall (27) which is bevelled by approximately 30° to 60° versus the tunnel sections (1,2).

2. A universal telescopic gangway according to Claim 1, **characterized in that** the sidewall (27) is arranged at an angle of approximately 45° versus the longitudinal wall of the tunnel section (2).

3. A universal telescopic gangway according to any one of Claim 1 or 2, **characterized in that** an undivided cabin floor (16) slidable wholly or partly towards the side is arranged at the aircraft-side end.

4. A universal telescopic gangway according to any one of Claim 1, 2 or 3, **characterized in that** a window (23) is arranged in the sidewall (27) of the cranked bridge head (13).

5. A universal telescopic gangway according to any one of Claim 1 to 4, **characterized in that** a wedge-shaped adapter (26) is inserted between the outer tunnel (2) and the fixed bridge head (13), whereby a steadily inclined cabin floor (16) towards the aircraft is ensured.

6. A universal telescopic gangway according to any one of the preceding claims, **characterized in that** a pivot (9) for vertical adjustment of the cabin (14) is located in the area of the middle axis of a rotunda arranged at the aircraft passenger building.

7. A universal telescopic gangway according to any one of the preceding claims, **characterized in that** the bridge travel drive which can be pivoted around a central hinge comprises distance pick-up devices to determine the distance towards the aircraft in order to stop the travel drive automatically when a certain minimum distance is reached.

## Revendications

1. Passerelle universelle pour les passagers des avions de transport régional, les avions grands porteurs et moyens porteurs, selon laquelle
a) la passerelle est constituée d'au moins deux éléments de tunnel télescopables (1,2) et peut être déplacée librement sur l'aire de stationnement au moyen du cadre de levage (11) et du mécanisme de déplacement (12),
b) la passerelle comporte côté avion une tête de passerelle (13) solidaire de l'élément de tunnel (2) et coudée vers le côté gauche,
c) une cabine (14) est fixée à la tête de passerelle (13) et peut pivoter autour d'un axe de rotation jusqu'à 90° et
d) l'axe de rotation vertical de la cabine (14) est excentré par rapport à l'axe longitudinal central de l'élément de tunnel (2),
**caractérisée en ce que** la tête de passerelle (13) comporte une paroi latérale (27) extérieure plane et inclinée d'environ 30° à 60° par rapport aux éléments de tunnel (1,2).

2. Passerelle universelle pour passagers selon la revendication 1, **caractérisée en ce que** la paroi latérale (27) est disposée dans un angle d'environ 45° par rapport à la paroi latérale de l'élément de tunnel (2).

3. Passerelle universelle pour passagers selon la revendication 1 ou 2, **caractérisée en ce qu'**un plancher de cabine (16) en une pièce est ordonné à l'extrémité côté avion, ledit plancher de cabine pouvant être déplacé entièrement ou partiellement sur le côté.

4. Passerelle universelle pour passagers selon la revendication 1, 2 ou 3, **caractérisée en ce qu'**une fenêtre (23) est disposée dans la paroi latérale (27) de la tête de passerelle (13) coudée.

5. Passerelle universelle pour passagers selon une des revendications 1 à 4, **caractérisée en ce qu**'un adaptateur (26) cunéiforme est installé entre le tunnel extérieur (2) et la tête de passerelle fixe (13), ce qui garantit que le plancher de la cabine (16) est toujours incliné légèrement vers l'avion.

6. Passerelle universelle pour les passagers selon une des revendications précédentes, **caractérisée en ce qu'**une charnière (9) pour le mouvement vertical de la cabine (14) se trouve dans la zone de l'axe central d'une rotonde disposée au niveau du bâtiment d'aéroport.

7. Passerelle universelle pour passagers selon une des revendications précédentes, **caractérisée en ce que** le mécanisme de déplacement de la passerelle orientable autour d'une articulation centrale comporte des appareils de saisie de la distance pour déterminer la distance par rapport à l'avion, dans le but d'arrêter automatiquement le mécanisme de déplacement lorsqu'une distance minimum déterminée est atteinte.
